# EUROPEAN PATENT APPLICATION

(11) **EP 2 163 925 A2**
(43) Date of publication of application: **17.03.2010**
(21) Application number: 09168044.7
(22) Date of filing: 18.08.2009
(51) Int. Cl.: G02B 6/13, G02B 6/122

(54) **Manufacturing method of optical waveguide on a irradiation light absorbing substrate**

(30) Priority: 12.09.2008 JP 2008234735
(71) Applicant: Nitto Denko Corporation, Ibaraki-shi, Osaka 567-8680 (JP)
(72) Inventor: Fujisawa, Junichi, Ibaraki-shi Osaka 567-8680 (JP); Shimizu, Yusuke, Ibaraki-shi Osaka 567-8680 (JP)
(74) Representative: Skuhra, Udo

(57) **Abstract**

A manufacturing method of an optical waveguide device which is capable of suppressing the surface roughening of core side surfaces of an optical waveguide when the optical waveguide is formed on a roughened surface of a substrate (1). An under cladding layer (2) is formed on a roughened surface of a substrate made of a material that absorbs irradiation light, and then a photosensitive resin layer (3A) for the formation of cores is formed thereon. Irradiation light (L) is directed toward this photosensitive resin layer to expose the photosensitive resin layer in a predetermined pattern to the irradiation light through the mask (M). When the irradiation light transmitted through the photosensitive resin layer for the formation of the cores and the under cladding layer reaches the surface of the substrate, the irradiation light is absorbed by the substrate, so that there is little irradiation light reflected from the surface of the substrate.

## Description

### BACKGROUND OF THE INVENTION

### 1. Field of the invention

The present invention relates to a manufacturing method of an optical waveguide device for widespread use in optical communications, optical information processing and other general optics.

### 2. Description of the Related Art

In general, an optical waveguide for an optical waveguide device is constructed such that cores serving as a passageway for light are formed in a predetermined pattern on a surface of an under cladding layer, and such that an over cladding layer is formed so as to cover the cores. Such an optical waveguide is typically formed on a surface of a substrate such as a metal substrate and the like, and is manufactured together with the substrate to provide an optical waveguide device.

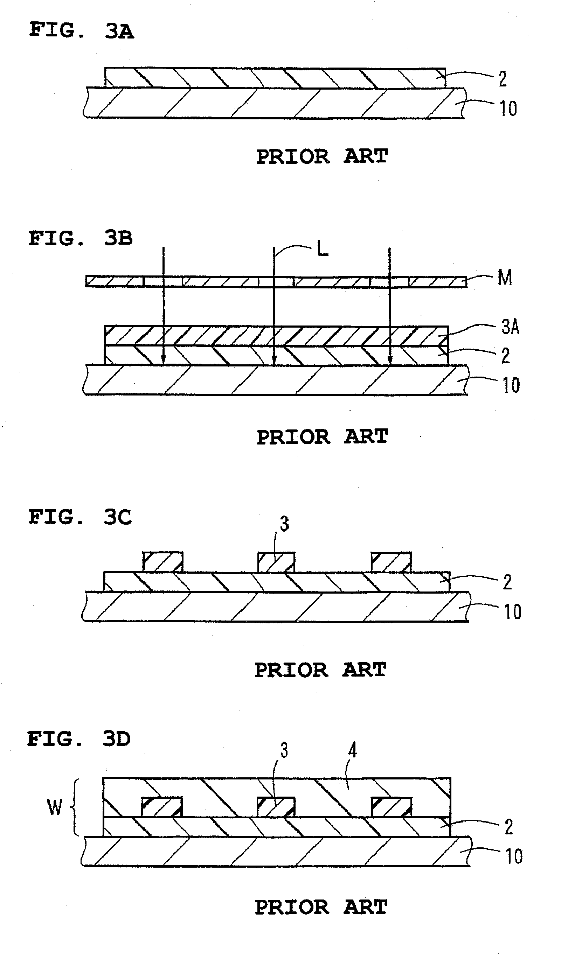

A conventional manufacturing method of such an optical waveguide device is as follows. First, as shown in FIG. 3A, an under cladding layer 2 is formed on a surface of a substrate 10. Then, as shown in FIG. 3B, a photosensitive resin for the formation of cores is applied to a surface of the under cladding layer 2 to form a photosensitive resin layer 3A. Next, irradiation light L is directed through a photomask M formed with an opening pattern corresponding to the pattern of the cores toward the above-mentioned photosensitive resin layer 3A. The irradiation light L is caused to reach the above-mentioned photosensitive resin layer 3A through openings of the above-mentioned opening pattern, thereby exposing portions of the photosensitive resin layer 3A thereto. The above-mentioned irradiation light L impinges upon the above-mentioned photosensitive resin layer 3A at right angles thereto. A photoreaction proceeds in the portions exposed to the irradiation light L so that the exposed portions are hardened. Then, development is performed using a developing solution to dissolve away unexposed portions, as shown in FIG. 3C. The remaining exposed portions become cores 3 in a predetermined pattern. The cores 3 are typically formed to be rectangular in sectional configuration. Thereafter, as shown in FIG. 3D, an over cladding layer 4 is formed on the surface of the above-mentioned under cladding layer 2 so as to cover the cores 3. In this manner, an optical waveguide W is formed on the surface of the above-mentioned substrate 10 (see, for example, Japanese Patent Application Laid-Open No. 2004-341454).

### DISCLOSURE OF THE INVENTION

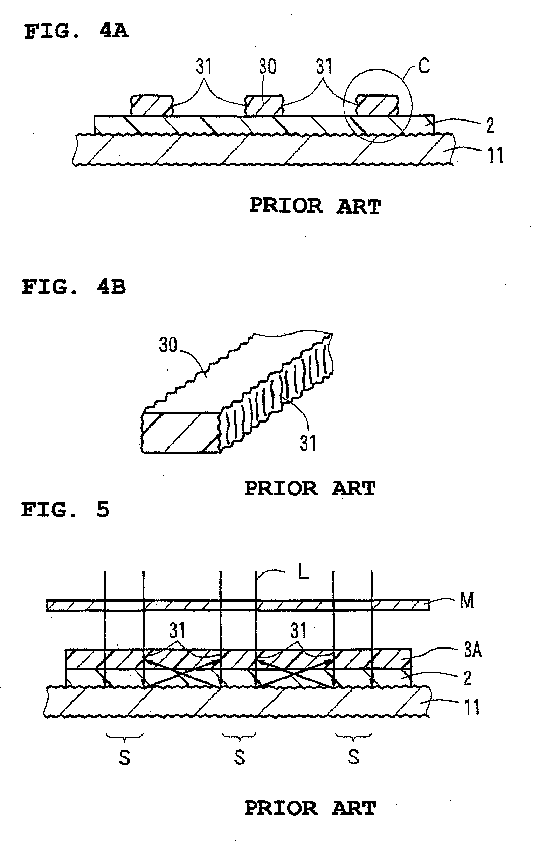

In such a conventional method, however, the side surfaces 31 of cores 30 have been formed as roughened surfaces in some cases, as shown in FIGS. 4A and 4B. An optical waveguide having such cores 30 presents a problem in that the loss of light propagating inside the cores 30 is increased. FIG. 4B is a view drawn based on a photograph in perspective of a core 30 enclosed with a circle C of FIG. 4A which is magnified 700 times with an electron microscope. By magnifying the core 30 700 times with the electron microscope in this manner, it can be seen that the side surfaces 31 of the cores 30 are formed as roughened surfaces.

The present inventors have made studies to diagnose the cause of the formation of the side surfaces 31 of the cores 30 as the roughened surfaces. In the course of the studies, the present inventors have found that the surface roughening of the side surfaces 31 of the above-mentioned cores 30 occurs when a metal substrate 11 made of metal foil such as SUS (Steel Use Stainless) foil is used as the above-mentioned substrate 10 with reference to FIGS. 3A to 3D, as shown in FIG. 4A. As a result of further studies, it has been found that the metal substrate 11 made of the above-mentioned metal foil and the like has a surface which is a roughened surface, as shown in FIG. 4A. For this reason, in the above-mentioned core formation step, the irradiation light L for use in the exposure passes through the photosensitive resin layer 3A for the core formation and the under cladding layer 2, and thereafter is reflected diffusely from the roughened surface of the above-mentioned metal substrate 11 because of the roughened surface thereof, as shown in FIG. 5. The diffusely reflected irradiation light L is transmitted through the above-mentioned under cladding layer 2 obliquely upwardly from below. Then, boundary surfaces (surfaces which are to become the side surfaces 31) for the patterning of the cores 30 are exposed to the diffusely reflected irradiation light L directed obliquely from below in future core regions S included in the photosensitive resin layer 3A for the core formation. This exposure to the light directed obliquely from below results from the above-mentioned diffuse reflection, and is uneven. Thus, it has been found that an unwanted photoreaction proceeds unevenly at the surfaces which are to become the side surfaces 31 of the cores 30 because of the exposure to the light directed obliquely from below to result in the increased width of the cores 30 and the formation of the side surfaces 31 of the cores 30 as the roughened surfaces. In other words, the surfaces which are to become the side surfaces 31 of the cores 30 show variations in the degree of exposure to light or have both the unexposed portions and the exposed portions because of the diffuse reflection of the above-mentioned irradiation light L. In a subsequent step of development, the portions low in the degree of exposure to light and the unexposed portions of the surfaces which are to become the side surfaces 31 of the above-mentioned cores 30 are dissolved away, and the portions high in the degree of exposure to light and the exposed portions remain unremoved. Thus, the side surfaces 31 of the cores 30 are formed as the roughened surfaces.

In view of the foregoing, it is an object of the present invention to provide a manufacturing method of an optical waveguide device which is capable of suppressing the surface roughening of core side surfaces of an optical waveguide when the optical waveguide is formed on a roughened surface of a substrate.

To accomplish the above-mentioned object, a method of manufacturing an optical waveguide device according to the present invention comprises the steps of: forming an under cladding layer on a surface of a substrate in the form of a roughened surface; forming a photosensitive resin layer for core formation on a surface of the under cladding layer; and directing irradiation light toward the photosensitive resin layer to expose the photosensitive resin layer in a predetermined pattern to the irradiation light, thereby forming exposed portions of the photosensitive resin layer into cores, wherein, in the step of forming the cores, the irradiation light directed toward said photosensitive resin layer is irradiation light transmitted through the photosensitive resin layer, reaching the roughened surface of said substrate and reflected therefrom, and wherein said substrate is made of a material that absorbs said irradiation light.

In the manufacturing method of the optical waveguide device according to the present invention, the under cladding layer is formed on the surface of the substrate made of the material that absorbs the irradiation light, and then the photosensitive resin layer for the formation of the cores is formed thereon. Thereafter, the irradiation light is directed toward this photosensitive resin layer to expose the photosensitive resin layer in the predetermined pattern to the irradiation light, thereby forming the exposed portions of the photosensitive resin layer into the cores. In this step of forming the cores, when the irradiation light transmitted through the photosensitive resin layer for the formation of the cores and the under cladding layer reaches the surface of the above-mentioned substrate, all or most of the irradiation light is absorbed by the above-mentioned substrate, so that there is none or little irradiation light reflected from the surface of the above-mentioned substrate, even if the surface of the above-mentioned substrate is a roughened surface, because the above-mentioned substrate is made of the material that absorbs the irradiation light. This significantly reduces the irradiation light reflected diffusely from the surface of the substrate, transmitted through the under cladding layer obliquely upwardly from below, and reaching the photosensitive resin layer for the formation of the cores. As a result, there is none or little irradiation light which causes the surface roughening by exposing the surfaces that are to become the side surfaces of the cores thereto obliquely upwardly from below in the photosensitive resin layer for the formation of the cores. This effectively suppresses the surface roughening of the side surfaces of the cores. Additionally, according to the present invention, the substrate itself that forms the optical waveguide absorbs the irradiation light to cause little irradiation light to be reflected from the surface of the substrate. This eliminates the need to provide a new layer for the absorption of the irradiation light to offer the advantage of preventing the increase in the total thickness of the optical waveguide device.

### BRIEF DESCRIPTION OF DRAWINGS

FIG. 1A is a sectional view schematically showing an optical waveguide device provided by a manufacturing method of an optical waveguide device according to one embodiment of the present invention.
FIG. 1B is a view drawn based on an electron micrograph of a core enclosed with a circle C of FIG. 1A.
FIGS. 2A to 2D are illustrations schematically showing the manufacturing method of the optical waveguide device according to the one embodiment of the present invention.
FIGS. 3A to 3D are illustrations schematically showing a conventional manufacturing method of an optical waveguide device.
FIG. 4A is a sectional view schematically showing the formation of cores in the above-mentioned conventional manufacturing method of the optical waveguide device.
FIG. 4B is a view drawn based on an electron micrograph of a core enclosed with a circle C of FIG. 4A.
FIG. 5 is an illustration schematically showing a situation in the step of forming the cores in the above-mentioned conventional manufacturing method of the optical waveguide device.

### DETAILED DESCRIPTION OF THE INVENTION

Next, an embodiment according to the present invention will now be described in detail with reference to the drawings.

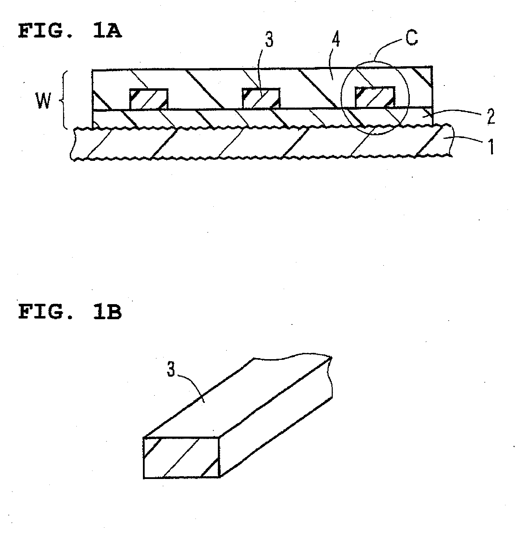

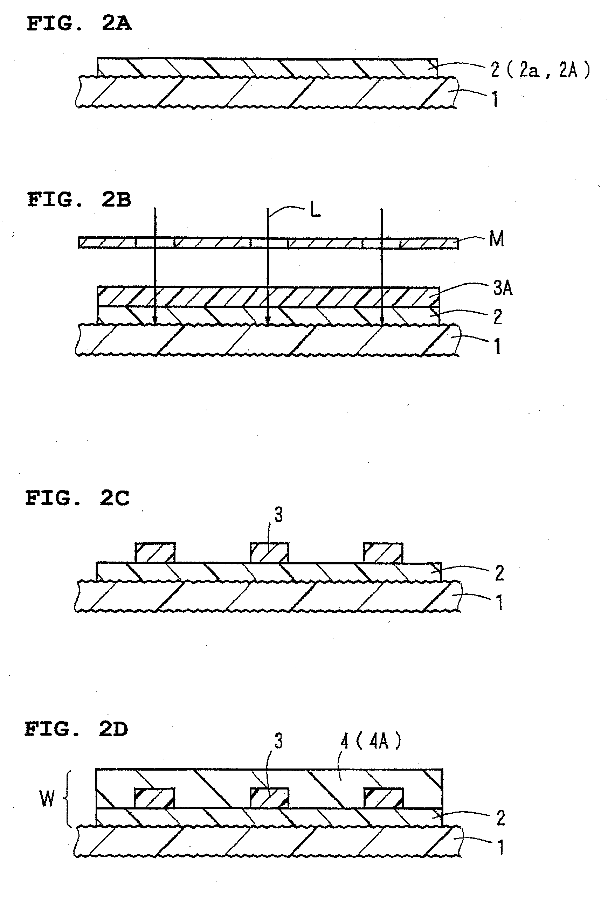

FIG. 1A shows an optical waveguide device provided by a manufacturing method of an optical waveguide device according to one embodiment of the present invention. This optical waveguide device includes a substrate 1 made of a material that absorbs irradiation light and having a surface that is a roughened surface, and an optical waveguide W formed on the surface of the substrate 1. This optical waveguide W includes an under cladding layer 2 formed on the surface of the above-mentioned substrate 1, and is manufactured in a manner to be described below. Specifically, a photosensitive resin layer 3A (with reference to FIG. 2B) is formed on a surface of the above-mentioned under cladding layer 2. Thereafter, irradiation light L is directed toward this photosensitive resin layer 3A to expose the photosensitive resin layer 3A in a predetermined pattern to the irradiation light L, thereby forming cores 3. Further, an over cladding layer 4 is formed over the cores 3 in a stacked manner. The optical waveguide W is thus manufactured. The material that forms the above-mentioned substrate 1 and absorbs the irradiation light performs the function of absorbing the irradiation light L impinging upon the above-mentioned photosensitive resin layer 3A to prevent diffuse reflection. FIG. 1B is a view drawn based on a photograph in perspective of a core 3 enclosed with a circle C of FIG. 1A which is magnified 700 times with an electron microscope.

The manufacturing method of the optical waveguide device according to this embodiment will be described in detail.

First, the above-mentioned substrate 1 (with reference to FIG. 2A) is prepared. This substrate 1 is made of the material that absorbs the irradiation light L such as ultraviolet light and the like for use in exposure of the photosensitive resin layer 3A for the formation of the cores 3 thereto in a subsequent step of forming the cores 3 (with reference to FIGS. 2B and 2C), and has a surface that is a roughened surface, as mentioned earlier. Examples of the material for the above-mentioned substrate 1 that absorbs the above-mentioned irradiation light L include materials containing polymethyl methacrylate (PMMA), polyimide (PI) and the like as main components. The term "main component" as used herein refers to a component that makes up at least 50% of the whole, and is to be interpreted as including meaning that the whole consists only of the main component. The above-mentioned substrate 1 used typically is commercially available. Both upper and lower surfaces of the above-mentioned substrate 1 commercially available become finely roughened surfaces inevitably in the course of the manufacture thereof. The arithmetic mean roughness (Ra) of the surfaces of the commercially available substrate 1 is not less than 0.095 µm. For example, a substrate having a thickness in the range of 20 µm to 1 mm is used as the above-mentioned substrate 1.

Next, as shown in FIG. 2A, a varnish prepared by dissolving a photosensitive resin for the formation of the under cladding layer 2 in a solvent is applied to a predetermined region of the surface of the above-mentioned substrate 1 to form a coating layer 2a thereof. Examples of the above-mentioned photosensitive resin include photosensitive epoxy resins, and the like. The application of the above-mentioned varnish is achieved, for example, by a spin coating method, a dipping method, a casting method, an injection method, an ink jet method and the like. Then, the above-mentioned coating layer 2a is dried by a heating treatment at 50 to 120°C for 10 to 30 minutes, as required. This provides a photosensitive resin layer 2A for the formation of the under cladding layer.

Next, the photosensitive resin layer 2A is exposed to irradiation light. Examples of the above-mentioned irradiation light for the exposure used herein include visible light, ultraviolet light, infrared light, X-rays, alpha rays, beta rays, gamma rays and the like. Preferably, ultraviolet light (with a wavelength 250 to 400 nm) is used. This is because the use of ultraviolet light achieves irradiation with large energy to provide a high rate of hardening, and an irradiation apparatus therefore is small in size and inexpensive to achieve the reduction in production costs. A light source of the ultraviolet light may be, for example, a low-pressure mercury-vapor lamp, a high-pressure mercury-vapor lamp, an ultra-high-pressure mercury-vapor lamp and the like. The dose of the ultraviolet light is typically 10 to 10000 mJ/cm², preferably 50 to 3000 mJ/cm².

After the above-mentioned exposure, a heating treatment is performed to complete a photoreaction. This heating treatment is performed at 80 to 250°C, preferably at 100 to 200°C, for 10 seconds to two hours, preferably for five minutes to one hour. This causes the above-mentioned photosensitive resin layer 2A to be formed into the under cladding layer 2, as shown in FIG. 2A. The thickness of the under cladding layer 2 is typically in the range of 1 to 50 µm, preferably in the range of 5 to 30 µm.

Next, as shown in FIG. 2B, the photosensitive resin layer 3A for the formation of the cores 3 (with reference to FIG. 2C) is formed on the surface of the above-mentioned under cladding layer 2. The formation of this photosensitive resin layer 3A is carried out in a manner similar to the process for forming the photosensitive resin layer 2A for the formation of the under cladding layer 2, which is described with reference to FIG. 2A. The material for the formation of the cores 3 used herein has a refractive index higher than that of the material for the formation of the above-mentioned under cladding layer 2 and the over cladding layer 4 (with reference to FIG. 2D) to be described later. The adjustment of the refractive indices may be made, for example, by adjusting the selection of the types of the materials for the formation of the under cladding layer 2, the cores 3 and the over cladding layer 4 described above and the composition ratio thereof.

Thereafter, a photomask M formed with an opening pattern corresponding to the cores 3 is placed over the photosensitive resin layer 3A for the formation of the above-mentioned cores 3. A portion of the photosensitive resin layer 3A corresponding to the above-mentioned opening pattern is exposed to the irradiation light L through this photomask M. This exposure is performed in a manner similar to that in the step of forming the under cladding layer 2 mentioned earlier. During the above-mentioned exposure, the above-mentioned irradiation light L impinges upon the above-mentioned photosensitive resin layer 3A at right angles thereto to cause the photoreaction to proceed in portions exposed to the irradiation, thereby hardening the exposed portions. This irradiation light L is transmitted through the above-mentioned photosensitive resin layer 3A and the above-mentioned under cladding layer 2 to reach the surface of the above-mentioned substrate 1. Since the above-mentioned substrate 1 is made of the material that absorbs the irradiation light L, all or most of the irradiation light L that has reached the surface of the above-mentioned substrate 1 is absorbed by the above-mentioned substrate 1, and there is none or little irradiation light L that is reflected from the surface of the above-mentioned substrate 1. Thus, part of the irradiation light L reflected diffusely from the surface of the substrate 1 and transmitted through the under cladding layer 2 obliquely upwardly from below is significantly reduced. As a result, there is none or little irradiation light L to which the surfaces that are to become the side surfaces of the cores 3 are exposed due to the diffuse reflection thereof in the photosensitive resin layer 3A for the formation of the cores 3. This suppresses the surface roughening of the side surfaces of the cores 3.

After the above-mentioned exposure, a heating treatment is performed in a manner similar to that in the step of forming the under cladding layer 2 mentioned earlier. Then, development is performed using a developing solution. This dissolves away unexposed portions of the above-mentioned photosensitive resin layer 3A to cause portions of the photosensitive resin layer 3A remaining on the under cladding layer 2 to be formed into the pattern of the cores 3, as shown in FIG. 2C. The above-mentioned development employs, for example, an immersion method, a spray method, a puddle method and the like. Examples of the developing solution used herein include an organic solvent, an organic solvent containing an alkaline aqueous solution, and the like. The developing solution and conditions for the development are selected as appropriate depending on the composition of a photosensitive resin composition.

After the above-mentioned development, the developing solution remaining on the surface and the like of the photosensitive resin layer 3A formed in the pattern of the cores 3 is removed by a heating treatment. This heating treatment is typically performed at 80 to 120°C for 10 to 30 minutes. This causes the photosensitive resin layer 3A formed in the pattern of the above-mentioned cores 3 to be formed into the cores 3. The surface roughening of the side surfaces of the cores 3 is suppressed, as mentioned earlier. The thickness of the above-mentioned cores 3 is typically in the range of 5 to 150 µm, preferably in the range of 5 to 100 µm. The width of the cores 3 is typically in the range of 5 to 150 µm, preferably in the range of 5 to 100 µm.

Next, as shown in FIG. 2D, a photosensitive resin layer 4A for the formation of the over cladding layer 4 is formed on the surface of the above-mentioned under cladding layer 2 so as to cover the cores 3. The formation of this photosensitive resin layer 4A is carried out in a manner similar to the process for forming the photosensitive resin layer 2A for the formation of the under cladding layer 2, which is described with reference to FIG. 2A. Thereafter, exposure to light, a heating treatment and the like are performed in a manner similar to those in the step of forming the under cladding layer 2 to cause the above-mentioned photosensitive resin layer 4A to be formed into the over cladding layer 4. The thickness of the over cladding layer 4 (the thickness as measured from the surface of the cores 3) is typically in the range of 5 to 100 µm, preferably in the range of 10 to 80 µm.

In this manner, an optical waveguide device is provided in which the optical waveguide W including the under cladding layer 2, the cores 3 and the over cladding layer 4 described above is formed on the surface of the substrate 1. The optical waveguide W in this optical waveguide device has small light propagation losses to achieve good propagation of light because the surface roughening of the side surfaces of the cores 3 is suppressed.

In the above-mentioned embodiment, no components are formed on the back surface of the substrate 1 (the surface opposite from the surface on which the above-mentioned optical waveguide W is formed). However, the above-mentioned substrate 1 may be a substrate having a back surface on which an electric circuit is formed, with an insulation layer therebetween, or a substrate such that the electric circuit is formed with mounting pads on which optical elements such as a light-emitting element, a light-receiving element and the like are mounted.

In the above-mentioned embodiment, the over cladding layer 4 is formed. However, this over cladding layer 4 may be dispensed with in some instances.

Next, an inventive example of the present invention will be described in conjunction with a comparative example. It should be noted that the present invention is not limited to the inventive example.

### INVENTIVE EXAMPLE 1

### Substrate

A PMMA substrate [manufactured by Mitsubishi Rayon Co., Ltd., and having a thickness of 2000 µm and an arithmetic mean roughness (Ra) of 1.5 µm] was prepared.

### Material for Formation of Under Cladding Layer and Over Cladding Layer

A material for formation of an under cladding layer and an over cladding layer was prepared by mixing 35 parts by weight of bisphenoxyethanol fluorene glycidyl ether (component A) represented by the following general formula (1), 40 parts by weight of 3',4'-epoxycyclohexyl methyl-3,4-epoxycyclohexane carboxylate which is an alicyclic epoxy resin (CELLOXIDE 2021P manufactured by Daicel Chemical Industries, Ltd.) (component B), 25 parts by weight of (3'4'-epoxycyclohexane)methyl-3',4'-epoxycyclohexyl-carboxylate (CELLOXIDE 2081 manufactured by Daicel Chemical Industries, Ltd.) (component C), and 2 parts by weight of a 50% propione carbonate solution of 4,4'-bis[di(β-hydroxyethoxy)phenylsulfinio]phenyl-sulfide-bis-hexafluoroantimonate (component D). 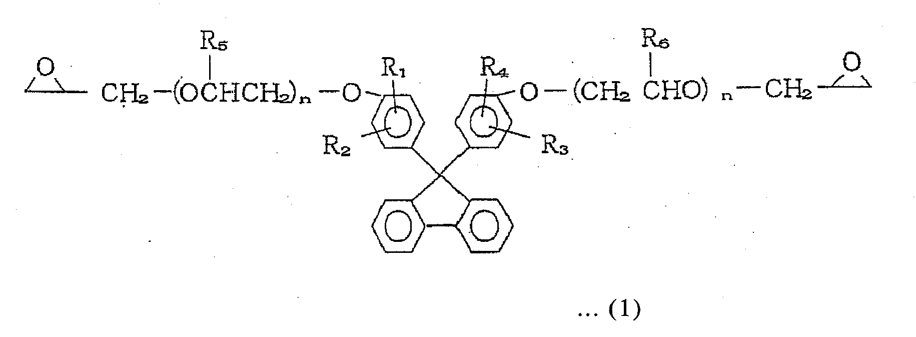 wherein R₁ to R₆ are hydrogen atoms, and n = 1.

### Material for Formation of Cores

A material for formation of cores was prepared by dissolving 70 parts by weight of the aforementioned component A, 30 parts by weight of 1,3,3-tris{4-[2-(3-oxetanyl)]butoxyphenyl}butane and one part by weight of the aforementioned component D in ethyl lactate.

### Manufacture of Optical Waveguide Device

The material for the formation of the above-mentioned under cladding layer was applied to a surface of the above-mentioned PMMA substrate by using a spin coater to form a coating layer having a thickness of 20 µm. Thereafter, the entire surface of the coating layer was irradiated with ultraviolet light from an ultra-high-pressure mercury-vapor lamp so as to be exposed to the ultraviolet light at an integrated dose of 1000 mJ/cm² (based on an i-line standard). Subsequently, the exposed coating layer was allowed to stand for ten minutes on a hot plate at 120°C so that the reaction was completed. In this manner, the under cladding layer was formed.

Then, the material for the formation of the above-mentioned cores was applied to a surface of the above-mentioned under cladding layer by using a spin coater, and thereafter was allowed to stand for five minutes on a hot plate at 70°C so that the solvent was volatilized. Thus, a photosensitive resin layer for the formation of the cores was formed. Next, ultraviolet light was emitted from an ultra-high-pressure mercury-vapor lamp through a glass mask formed with a predetermined opening pattern (having an opening width of 50 µm, and a spacing of 200 µm between adjacent openings) so that the photosensitive resin layer was exposed to the ultraviolet light at an integrated dose of 2000 mJ/cm² (based on an i-line standard). Thereafter, the exposed photosensitive resin layer was allowed to stand for ten minutes on a hot plate at 120°C so that the reaction was completed. Next, development was performed with a spray developing machine using a developing solution including 90% by weight of γ-butyrolactone. Thus, the cores (having a height of 50 µm) was formed.

Then, the material for the formation of the above-mentioned over cladding layer was applied to the surface of the above-mentioned under cladding layer by using a spin coater so as to cover the above-mentioned cores. Thereafter, the over cladding layer was formed in a manner similar to that in the method of forming the above-mentioned under cladding layer. In this manner, an optical waveguide device (having a total thickness of 100 µm) was manufactured.

### COMPARATIVE EXAMPLE 1

An optical waveguide device was manufactured by forming the under cladding layer, the cores and the over cladding layer directly on a surface of SUS 304 foil [manufactured by Toyo Seihaku Co., Ltd., and having a thickness of 20 µm and an arithmetic mean roughness (Ra) of 0.095 µm] in a manner similar to that in Inventive Example 1 described above.

### Evaluation of Core Side Surfaces

The side surfaces of the cores of the optical waveguide devices in Inventive Example 1 and Comparative Example 1 described above were observed with a scanning electron microscope. As a result, the side surfaces of the cores in Comparative Example 1 were formed as roughened surfaces, but the side surfaces of the cores in Inventive Example 1 were much smoother than those in Comparative Example 1.

### Measurement of Core Width

Measurements of the widths of the cores of the optical waveguide devices were made with a scanning electron microscope in Inventive Example 1 and Comparative Example 1 described above. As a result, the width of the cores was 54 µm in Inventive Example 1, and the width of the cores was 62 µm in Comparative Example 1. It should be noted that each of the above-mentioned values of the widths of the cores is the average of the values of measurements in ten arbitrary locations.

### Measurement of Light Propagation Loss

The optical waveguide devices in Inventive Example 1 and Comparative Example 1 described above were cut using a dicing machine (DAD522 manufactured by Disco Corporation) so that the end surfaces of the cores were uncovered. Also, the above-mentioned optical waveguide devices were cut to a length of 10 cm, and light propagation losses were measured. As a result, the light propagation loss of the optical waveguide device in Inventive Example 1 was 1.65 dB/10 cm, and that in Comparative Example 1 was 5.22 dB/10 cm.

The above-mentioned results show that little diffuse reflection from the surface of the PMMA substrate occurs despite the high value of the arithmetic mean roughness (Ra) of the surface of the PMMA substrate in Inventive Example 1 because the surface roughening of the core side surfaces is suppressed in Inventive Example 1, as compared with Comparative Example 1. This is because most of the ultraviolet light used in the core formation step is absorbed by the PMMA substrate when the ultraviolet light reaches the surface of the PMMA substrate, so that significantly reduced is the irradiation light reflected diffusely from the surface of the PMMA substrate, transmitted through the under cladding layer obliquely upwardly from below, and reaching the photosensitive resin layer for the formation of the cores.

Although a specific form of embodiment of the instant invention has been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention which is to be determined by the following claims.

## Claims

1. A method of manufacturing an optical waveguide device, comprising the steps of:
forming an under cladding layer on a surface of a substrate having a roughened surface;
forming a photosensitive resin layer for core formation on a surface of the under cladding layer; and
directing irradiation light toward the photosensitive resin layer to expose the photosensitive resin layer in a predetermined pattern to the irradiation light, thereby forming exposed portions of the photosensitive resin layer into cores,
wherein, in the step of forming the cores, the irradiation light directed toward said photosensitive resin layer is irradiation light transmitted through the photosensitive resin layer, reaching the roughened surface of said substrate and reflected therefrom, and
wherein said substrate is made of a material that absorbs said irradiation light.

2. The method of manufacturing the optical waveguide device according to claim 1, wherein the material that absorbs said irradiation light contains polymethyl methacrylate as a main component.

3. The method of manufacturing the optical waveguide device according to claim 1 or 2, wherein the surface of said substrate has an arithmetic mean roughness (Ra) of not less than 0.095 µm.

4. The method of manufacturing the optical waveguide device according to any one of claim 1 to 3, wherein said irradiation light is ultraviolet light.
